# DEMANDE DE BREVET EUROPEEN

(11) **EP 2 821 197 A1**
(43) Date de publication de la demande: **07.01.2015**
(21) Numéro de dépôt: 13174868.3
(22) Date de dépôt: 03.07.2013
(51) Int. Cl.: B29C 31/00, B29D 23/20, B29C 65/78

(54) **Dispositif de soudage indexant pour tube**

(71) Demandeur: Aisapack Holding SA, 1896 Vouvry (CH)
(72) Inventeur: Stahl, Christophe, 1896 Vouvry (CH); Schwager, Jean-Claude, 1896 Vouvry (CH); Ferrin, Didier, 1896 Vouvry (CH)
(74) Mandataire: Grosfillier, Philippe

(57) **Abrégé**

Dispositif rotatif indexant pour la fabrication de tubes d'emballage comprenant une tourelle indexante (3) montée rotative autour d'un axe (9), des mandrins (4) et supports respectifs (14) rendus solidaires de ladite tourelle (3) et disposés radialement par rapport au dit axe (9); des moyens d'actionnement radial (10,11) pour déplacer les mandrins (4) selon une direction perpendiculaire au dit axe (9) et des moyens de guidage linéaire (13) pour assurer le déplacement des mandrins (4) selon une direction perpendiculaire au dit axe (9); **caractérisé** par le fait que les mandrins (4) et supports respectifs (14), les moyens d'actionnement radial (10,11) et les moyens de guidage linéaire (13) sont disposés selon une direction qui est parallèle au dit axe (9).

## Description

### Domaine de l'invention

L'invention se situe dans le domaine des dispositifs de fabrication de tubes flexibles d'emballage pour produits liquides ou visqueux, et plus particulièrement dans le domaine des tubes d'emballage fabriqués par soudage. Ces tubes sont constitués d'un corps de tube, d'une épaule de tube, éventuellement d'un opercule fermant l'orifice de l'épaule et d'un bouchon.

### Etat de la technique

Les tubes flexibles présentent généralement deux parties distinctes, à savoir une jupe ou corps cylindrique flexible reliée à une épaule comportant un goulot, éventuellement un opercule soudé sur le goulot, et un bouchon. La jupe du tube est obtenue soit par extrusion d'un corps tubulaire, soit par soudage d'une feuille multicouche.

On connaît des dispositifs rotatifs indexants permettant les opérations d'assemblage de la jupe, de l'épaule de l'opercule et du bouchon.

Les dispositifs rotatifs indexants pour assemblage de tubes opèrent par mouvements intermittents. La partie rotative du dispositif porte des mandrins qui se déplacent successivement d'une station de travail à l'autre. Les mandrins transportent l'emballage en cours de fabrication. Le dispositif indexant permet d'effectuer les opérations d'assemblage lorsque le dispositif rotatif est à l'arrêt, ce qui est avantageux pour la précision et la simplicité du dispositif. Le cycle du dispositif rotatif indexant est divisé en un temps de rotation et un temps d'arrêt. Le temps de rotation est appelé également temps d'indexage. Lorsque la tourelle est arrêtée débutent alors les opérations unitaires d'assemblage avec les mouvements suivants :
- Mouvement relatif d'approche entre les mandrins et les stations de travail;
- Mandrin dans la station de travail,
- Mouvement relatif de recul entre les mandrins et les stations de travail.

Pendant l'arrêt de la rotation de la tourelle s'effectuent les opérations unitaires d'assemblage comme par exemple :
1. chargement de l'épaule de tube sur le mandrin
2. chargement de la jupe de tube sur le mandrin
3. positionnement précis de la jupe sur le mandrin
4. chauffage de la zone à souder
5. soudage de la jupe sur l'épaule
6. operculage
7. bouchonnage
8. éjection

La réduction du temps de travail est limitée par la durée des opérations unitaires dont dépend la qualité de l'emballage fabriqué. Le temps de travail est fixé par l'opération unitaire la plus longue, comme par exemple l'opération de soudage. A partir d'une certaine limite, le temps de travail devient donc incompressible car sa réduction altérerait les propriétés mêmes de l'emballage. L'optimisation du temps d'indexage qui n'a pas d'influence sur la qualité de l'assemblage devient donc déterminante lorsque l'on veut atteindre des cadences de production élevées.

La demande de brevet WO 2004/026567 A1 propose un dispositif rotatif indexant avec des mandrins qui se situent dans un plan parallèle à l'axe de la tourelle indexante. L'optimisation du temps d'indexage de ce type de dispositif est limitée par l'inertie de la tourelle dont le diamètre augmente rapidement avec le nombre de mandrins en parallèle. Dans ce dispositif, le mouvement d'approche et recul est effectué par les stations de travail. Cela conduit à l'inconvénient que chaque station de travail est équipée d'un dispositif spécifique pour réaliser le mouvement d'approche.

Le brevet US 6 221 189 décrit un dispositif composé d'une tourelle indexante avec une disposition radiale des mandrins. Dans ce dispositif, les stations de travail effectuent le mouvement d'approche et de recul radial. Comme dans la demande de brevet WO 2004/026567 A1, le dispositif proposé par Kieras présente l'inconvénient que chaque station de travail requiert un dispositif spécifique pour réaliser le mouvement d'approche.

La demande de brevet WO 2007/141711 de la demanderesse décrit un dispositif permettant d'éliminer les inconvénients du dispositif présenté dans US 6 221 189. Ce dispositif (voir figures 2 et 3) propose une disposition radiale des mandrins **4** sur la tourelle **3.** La position des stations de travail est fixe. Les mandrins **4** exécutent le mouvement d'approche et de recul radial **15.** Le mode de construction du dispositif décrit dans cet art antérieur est particulièrement intéressant car il permet un actionnement simultané de tous les mandrins **4** pour le mouvement d'approche et de recul **15.** Le dispositif comprend un bâti **2** sur lequel est reliée une tourelle **3** qui tourne autour d'un axe **9** par l'intermédiaire d'un élément de guidage en rotation **12.** La tourelle entraîne des mandrins **4.** Les mandrins **4** se déplacent radialement par rapport à la tourelle **3** pour effectuer le mouvement d'approche et de recul **15.** Un élément de guidage linéaire **13** relie la tourelle **3** aux mandrins **4.** Le mouvement radial d'approche et de recul **15** des mandrins **4** est provoqué par un élément rotatif avec came **5** et ressort **6** ou avec un élément rotatif **10** avec bielle **11.** L'élément rotatif **5, 10** est relié à la tourelle par l'intermédiaire d'un élément de guidage rotatif **12.** Cependant, le dispositif décrit dans la demande WO 2007/141711 propose un mode de réalisation selon lequel les fonctions guidage linéaire **13** et actionnement des mandrins **5, 10, 11** sont disposées en série radialement sur l'axe **9** de la tourelle **3.** Ce mode de réalisation conduit à augmenter le diamètre virtuel **8** du cercle formé par les extrémités des mandrins et conduit donc à une inertie importante du dispositif en rotation (moment d'inertie). Cette augmentation de l'inertie s'oppose à la réduction du temps d'indexage.

Le dispositif de l'art antérieur décrit dans la demande de brevet WO 2007/141711 est représenté de façon conceptuelle sur la figure 1. Dans ce concept, la construction est basée sur une disposition radiale en série des éléments suivants :
- l'élément de guidage linéaire **13** du mandrin **4**
- l'élément d'actionnement **5, 10** du mandrin **4** pour effectuer la course d'approche et de recul **15**
- le mandrin **4** et son support **14**

Le dispositif de la demande WO 2007/141711 permet de mettre en mouvement radial tous les mandrins à partir d'un seul actionnement, mais présente l'inconvénient d'un moment d'inertie important, ce qui lors des phases d'accélération et décélération de la tourelle 3 génère des variations de couple importantes sur l'axe de la tourelle et limite les cadences de production.

### Problème à résoudre

Il s'agit de remédier aux inconvénients du dispositif proposé dans la demande de brevet WO 2007/141711.

### Définition des termes utilisés dans l'exposé de l'invention

- 1 :: dispositif rotatif indexant pour la fabrication de tubes par soudage
- 2 :: bâti
- 3 :: tourelle indexante
- 4 :: mandrin
- 5 :: élément d'actionnement rotatif avec came
- 6 :: ressort
- 7 :: cercle virtuel formé par la base des mandrins
- 8 :: cercle virtuel formé par l'extrémité des mandrins
- 9 :: axe de rotation de la tourelle
- 10 :: élément d'actionnement rotatif
- 11 :: bielle
- 12 :: élément de guidage en rotation
- 13 :: élément de guidage linéaire
- 14 :: support de mandrin
- 15 :: mouvement d'approche et de recul
- 16 :: longueur du mandrin
- 17 :: diamètre du mandrin
- 18 :: largeur du mandrin à la base

### Exposé général de l'invention

L'invention présente un dispositif d'assemblage indexant pour tubes d'emballage. Ce dispositif permet de réaliser par exemple les opérations successives suivantes nécessaires à la fabrication d'un tube d'emballage :
a) chargement de l'épaule de tube sur le mandrin
b) chargement de la jupe de tube sur le mandrin
c) positionnement précis de la jupe sur le mandrin
d) chauffage de la zone à souder
e) soudage de la jupe sur l'épaule
f) operculage
g)bouchonnage
h) éjection

L'invention propose un dispositif particulièrement avantageux pour réduire le temps d'indexage et atteindre des cadences de production élevées tout en conservant un mode d'actionnement radial des mandrins tel que décrit dans la demande WO 2007/141711.

Dans la présente invention, l'inertie du dispositif est plus faible que celle des dispositifs similaires de l'état de la technique. Il en résulte que le temps d'indexage peut être réduit, ce qui offre la possibilité d'augmenter la cadence de production.

Exprimé différemment, l'invention permet d'augmenter la cadence de production sans diminuer le temps de soudage.

A relever également que cette augmentation de cadence n'a pas un effet sur la qualité de l'emballage produit, ni au niveau de ses performances, ni au niveau de son apparence.

L'invention concerne en particulier un dispositif rotatif indexant pour la fabrication de tubes d'emballage comprenant une tourelle montée rotative autour d'un axe. Le dispositif selon l'invention comprend en outre les éléments suivants : des mandrins et supports respectifs rendus solidaires de ladite tourelle et disposés radialement par rapport au dit axe
- des moyens d'actionnement radial pour déplacer les mandrins selon une direction perpendiculaire audit axe
- des moyens de guidage linéaire pour déplacer les mandrins selon une direction perpendiculaire au dit axe.

Le dispositif selon l'invention se caractérise par le fait que les mandrins et supports respectifs, les moyens d'actionnement radial et les moyens de guidage linéaire sont disposés le long d'une ligne droite qui est parallèle au dit axe.

Il convient de souligner que dans l'art antérieur, en particulier WO 2007/141711, les mandrins et supports respectifs, les moyens d'actionnement radial et les moyens d'actionnement linéaire sont disposés le long d'une ligne droite qui est perpendiculaire au dit axe.

En optant pour une disposition parallèle des 3 éléments précités, on réduit considérablement le moment d'inertie de l'ensemble, conformément à la formule I=∑mᵢdᵢ² dans laquelle I représente le moment d'inertie, m la masse de chaque élément et d la distance de chaque élément par rapport à l'axe de rotation.

Ainsi, dans la présente invention, l'encombrement radial est seulement déterminé par la géométrie des mandrins et le nombre de stations.

L'invention permet de multiplier le nombre de mandrins en parallèle par station sans augmenter l'encombrement radial.

Selon un mode de réalisation de l'invention, le dit axe est disposé selon une direction verticale, càd selon une direction qui est sensiblement parallèle à la direction de la force de gravitation. Ce mode de réalisation est avantageux pour un dispositif posé sur une table. Il permet d'avoir toutes les stations à la même hauteur.

Selon un autre mode de réalisation de l'invention, le dit axe est disposé selon une direction horizontale, càd selon une direction qui est sensiblement perpendiculaire à la direction de la force de gravitation. Ce mode de réalisation est avantageux par rapport à la surveillance visuelle du dispositif. L'accès au poste de travail est plus direct.

Selon un autre mode de réalisation de l'invention la base de chaque mandrin contacte les bases des mandrins qui lui sont adjacents. Par « base » de mandrin, on entend la partie du mandrin qui est en contact avec la tourelle.

Selon un autre mode de réalisation, l'invention permet de s'affranchir du diamètre du tube à réaliser et de diminuer d'avantage le moment d'inertie. Cette variante consiste à profiler la géométrie des mandrins de sorte que la section de l'extrémité portant l'épaule du tube soit circulaire tandis que l'extrémité opposée du mandrin fixée sur le porte mandrin ait un encombrement circonférentiel selon l'axe de rotation de la tourelle qui soit minimal. Cette approche conduit généralement à des sections de mandrins de type « ovale à une extrémité et circulaire de l'autre.

Selon un mode de réalisation, les mandrins 4 sont disposés dans un plan perpendiculaire à l'axe de rotation de la tourelle.

Selon un autre mode de réalisation de l'invention, la surface virtuelle formée par les axes des mandrins est un cylindre centré sur l'axe de la tourelle.

Selon un autre mode de réalisation de l'invention, la surface virtuelle formée par les axes des mandrins est un cône centré sur l'axe de la tourelle.

### Brève description des figures

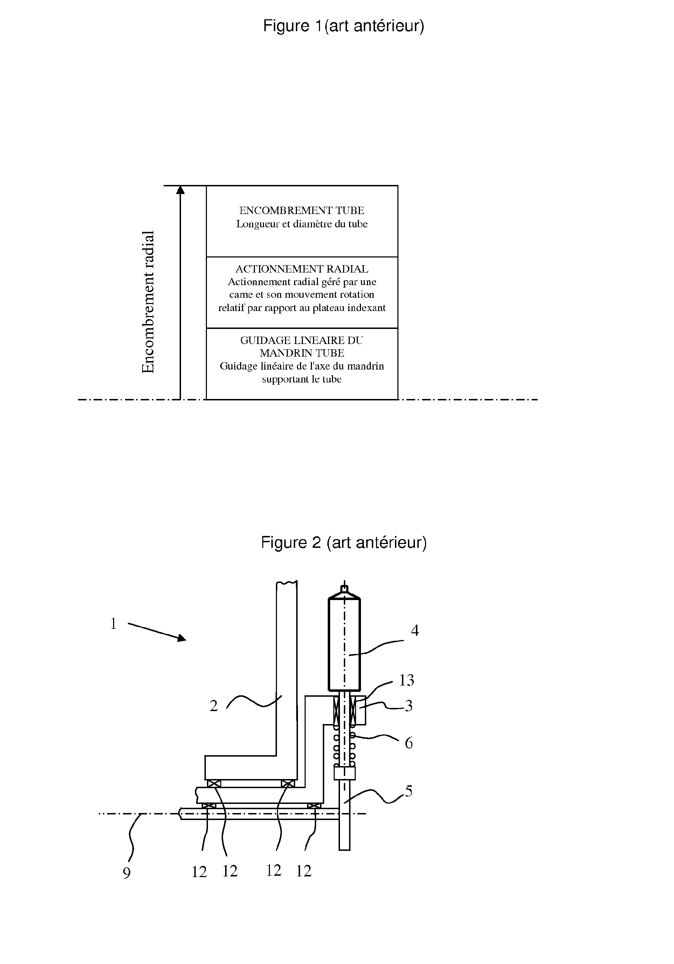

Les figures 1 à 3 présentent les dispositifs de l'art antérieur.
La figure 1 présente de façon conceptuelle les dispositifs de l'art antérieur.
La figure 2 illustre un dispositif de la demande de brevet WO 2007/141711 selon un plan de coupe comprenant l'axe de rotation de la tourelle.
La figure 3 présente un dispositif de la demande WO 2007/141711 selon une vue perpendiculaire à l'axe de rotation de la tourelle.
La figure 4 présente le concept du dispositif selon l'invention.
Les figures 5 et 6 illustrent un exemple de réalisation de l'invention.

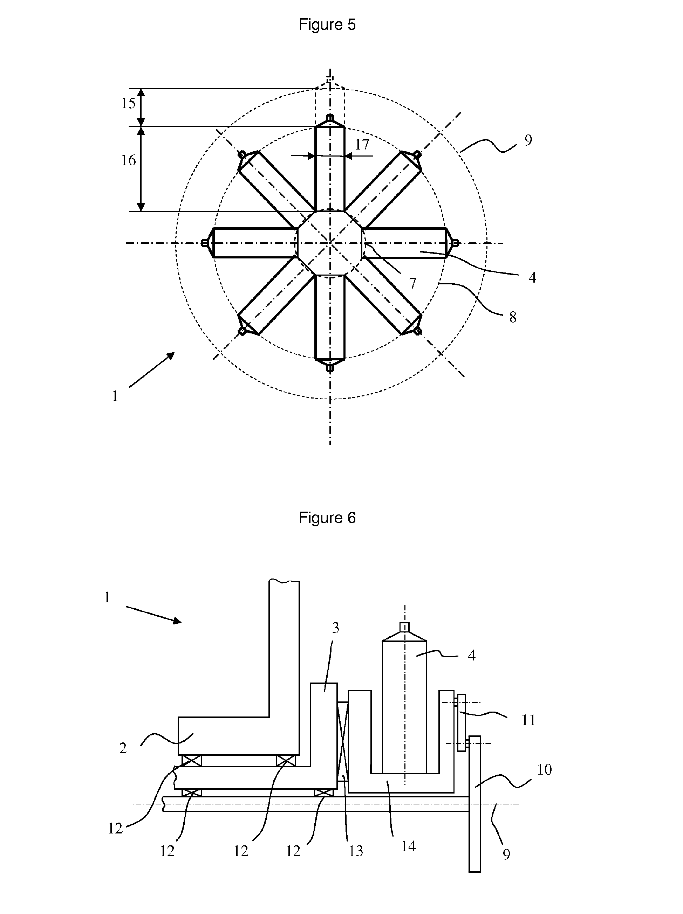

La figure 5 illustre un exemple de dispositif selon l'invention observé perpendiculairement à l'axe de rotation de la tourelle.
La figure 6 montre le dispositif de la figure 5 observé dans un plan de coupe comprenant l'axe de rotation de la tourelle.

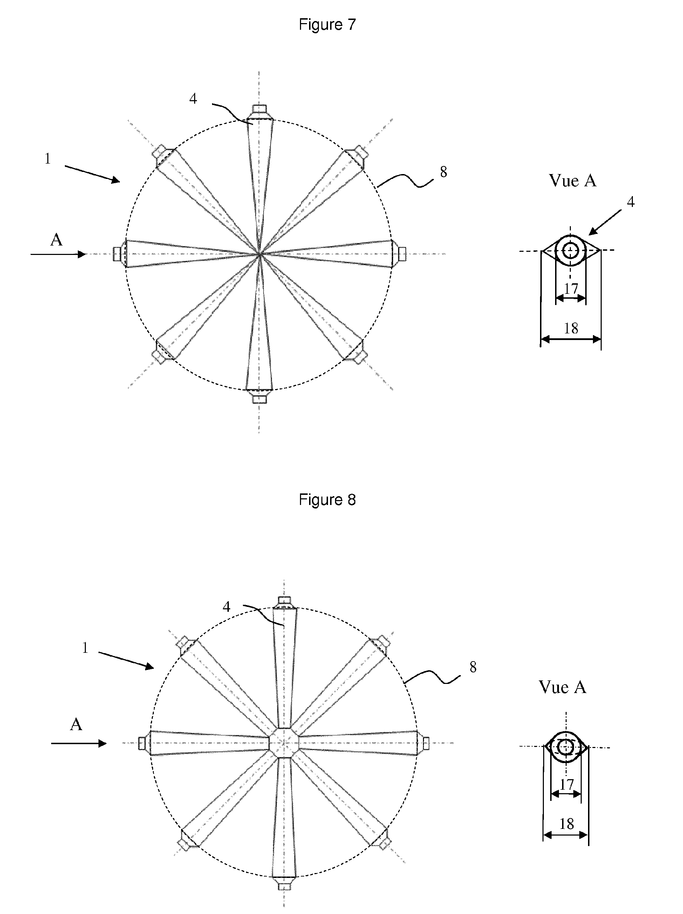

La figure 7 montre une variante de l'invention consistant à utiliser des mandrins de géométrie non cylindrique.
La figure 8 montre un exemple de réalisation de la variante de l'invention décrite figure 7.

### Exposé détaillé de l'invention

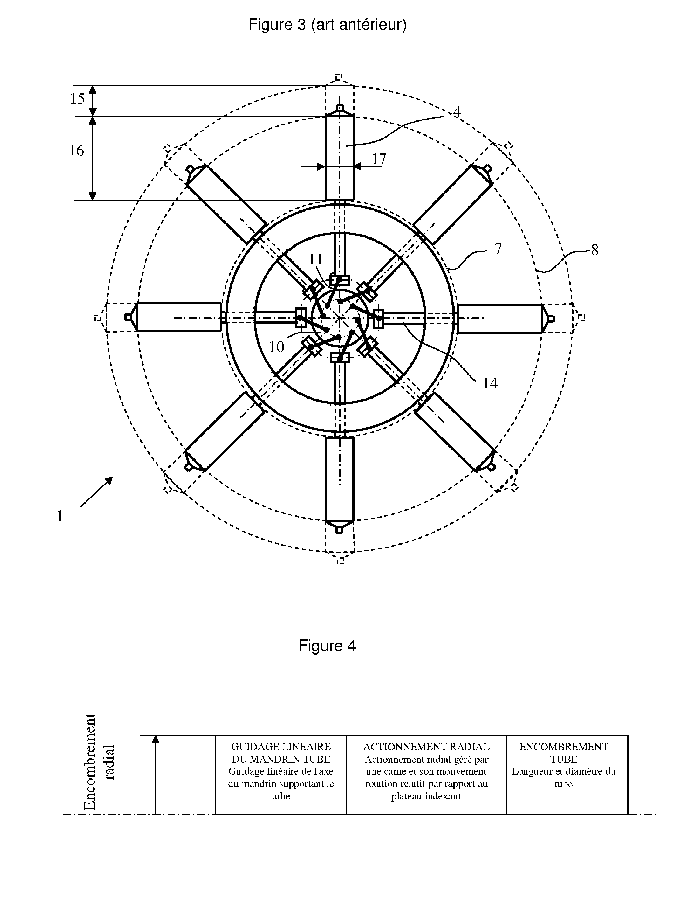

Selon le concept inventif présenté figure 4, le dispositif est basé sur une disposition radiale en parallèle des éléments suivants:
- L'élément de guidage linéaire 13 du mandrin 4
- L'élément d'actionnement du mandrin 4 pour effectuer la course d'approche et de recul 15
- le mandrin 4 et son support 14

La configuration décrite sur la figure 4 est particulièrement avantageuse car elle permet de réduire de façon importante le moment d'inertie de l'ensemble rotatif et par voie de conséquence augmenter les cadences de production en diminuant le temps d'indexage.

L'invention décrite figure 4 permet de rapprocher de l'axe de rotation 9 le centre d'inertie des mandrins 4, réduisant ainsi de façon significative le couple sur l'axe de la tourelle lors des phases d'accélération et décélération. L'invention permet d'augmenter significativement le niveau d'accélération et décélération de la tourelle sans générer un couple sur l'arbre d'entraînement trop important. L'invention peut donc être utilisée pour diminuer la puissance du moteur d'entraînement ou pour augmenter la cadence avec un moteur identique.

Lors des phases d'accélération et décélération du cycle d'indexage, chaque mandrin 4 crée un couple proportionnel au carré de la distance entre le centre d'inertie dudit mandrins et l'axe de rotation 9. Il est donc d'un grand intérêt de rapprocher au maximum les mandrins de l'axe de rotation 21.

La figure 5 illustre l'encombrement optimal du dispositif selon l'invention équipé de 8 mandrins 4 de section circulaire. Le dispositif indexant 1 est représenté perpendiculairement à l'axe de rotation de la tourelle entraînant en rotation les mandrins 4. Comme le montre la figure 5, le dispositif 1 est extrêmement compact puisqu'il correspond à l'encombrement théorique minimal de 8 mandrins positionnés autour d'un axe de rotation. L'encombrement du système dépend du diamètre 17 des mandrins 4 ainsi que de leur nombre. Dans la pratique, on maintient de préférence une très faible distance sépare la base des mandrins afin d'éviter les collisions lors des mouvements. La distance angulaire entre deux mandrins correspond à l'angle d'indexage. A la fin de chaque cycle d'indexage, les mandrins 4 se déplacent radialement d'une course 15 vers les stations de travail. Le mouvement radial d'approche et de recul 15 se fait de manière simultanée et identique pour tous les mandrins.

La figure 6 représente le dispositif 1 perpendiculairement à l'axe de rotation 9. Le bâti 2 supporte une tourelle 3 qui tourne autour de l'axe 9. Des éléments de guidage rotatif 12 relient la tourelle 3 au bâti. Les éléments de guidage rotatif 12 peuvent être des paliers lisses ou préférablement des roulements. En raison de leur faible encombrement, les roulements à aiguille peuvent être avantageux. Sur la tourelle 3 sont fixés les mandrins 4 par l'intermédiaire d'un support 14 et d'un guidage linéaire radial 13. Le guidage radial 13 permet d'effectuer le mouvement d'approche et de recul 15 par rapport aux stations de travail. Sur l'axe 9 est disposé un élément rotatif 10 qui actionne ledit mouvement d'approche et de recul par l'intermédiaire d'une bielle 11. L'élément rotatif 10, le guidage radial 13 ainsi que le mandrin 4 et son support 14, sont positionnés en parallèle le long de l'axe de rotation 9, ce qui a pour effet de diminuer l'encombrement radial matérialisé par le cercle virtuel 8 passant par l'extrémité des mandrins 4. Selon l'invention, l'encombrement radial peut être réduit d'un facteur 1,5 à 4 par rapport aux dispositifs de l'art antérieur.

Les figures 7 et 8 présentent une variante de réalisation de l'invention.

La figure 7 illustre une variante conceptuelle de réalisation de l'invention qui consiste à optimiser la géométrie des mandrins 4 pour rendre le dispositif 1 encore plus compact. La figure 7 montre une géométrie de mandrin 4 profilée, ayant une extrémité de section ajustée à celle de l'épaule de tube, par exemple circulaire ou ovale et l'autre extrémité dite « aplatie » afin que l'extrémité dite « aplatie » génère un faible encombrement circonférentiel et que l'axe de gravité des mandrins puisse être rapproché de l'axe de rotation 9. La vue A de la figure 9 illustre le mandrin 4 vu selon l'axe dudit mandrin. La figure 7 illustre un encombrement conceptuel qui n'est pas réalisable car l'extrémité des mandrins 4 correspond à l'axe de rotation 9. Selon le concept présenté figure 7, la section des mandrins varie le long de l'axe dudit mandrin, mais la circonférence reste constante.

La figure 8 présente une réalisation de l'invention selon le concept présenté figure 7. Les mandrins 4 présentent une section variable avec une circonférence constante, ce qui permet de réduire l'encombrement et par conséquent l'inertie du dispositif. La variante de l'invention présentée figure 8 est particulièrement avantageuse lorsque le diamètre des mandrins 4 est élevé.

L'invention ne se limite pas à la réalisation de tubes d'emballage de section cylindrique. La géométrie des tubes produite est par exemple de section ovale ou carré. La géométrie des mandrins 4 doit être adaptée à la géométrie du tube à réaliser. En particulier la géométrie de l'extrémité libre du mandrin 4 doit s'adapter à la géométrie de l'épaule de tube. Ainsi pour la réalisation d'un tube ovale, la géométrie libre du mandrin 4 sera ovale.

Les figures décrivant l'invention présentent les mandrins 4 dans un plan perpendiculaire à l'axe 9 de la tourelle 3.

Une variante de l'invention consiste à disposer les mandrins 4 sur une surface cylindrique centrée sur l'axe de rotation 9 de la tourelle 3.

Une autre variante de l'invention consiste à disposer les mandrins 4 sur une surface conique centrée sur l'axe de rotation 9 de la tourelle 3.

Selon un mode de réalisation de l'invention, l'espacement entre les stations de travail est minimisé.

L'invention est particulièrement avantageuse pour augmenter les cadences de production. Avec un dispositif mono-mandrin à 8 stations réalisé selon les descriptions de l'art antérieur une cadence de production de 60 tubes/min est atteinte :
- Vitesse de production : 60 tubes/min
- Temps de cycle du dispositif rotatif indexant : 1000 ms
- Temps de travail : 400 ms
- Temps d'indexage : 600 ms

Avec un dispositif mono-mandrin à 8 stations réalisé selon l'invention, la cadence de production est doublée à savoir :
- Vitesse de production 120 tubes/min
- Temps de cycle du dispositif rotatif indexant : 500 ms
- Temps de travail : 400 ms
- Temps d'indexage : 100 ms

Le temps de travail est conservé, tandis que le temps d'indexage est divisé par 6.

## Revendications

1. Dispositif rotatif indexant pour la fabrication de tubes d'emballage comprenant une tourelle indexante (3) montée rotative autour d'un axe (9), des mandrins (4) et supports respectifs (14) rendus solidaires de ladite tourelle (3) et disposés radialement par rapport au dit axe (9); des moyens d'actionnement radial (10,11) pour déplacer les mandrins (4) selon une direction perpendiculaire au dit axe (9) et des moyens de guidage linéaire (13) pour assurer le déplacement des mandrins (4) selon une direction perpendiculaire au dit axe (9); **caractérisé par le fait que** les mandrins (4) et supports respectifs (14), les moyens d'actionnement radial (10,11) et les moyens de guidage linéaire (13) sont disposés selon une direction qui est parallèle au dit axe (9).

2. Dispositif selon la revendication 1 dans lequel le dit axe (9) est disposé selon une direction verticale.

3. Dispositif selon la revendication 1 dans lequel le dit axe (9) est disposé selon une direction horizontale.

4. Dispositif selon l'une quelconque des revendications précédentes dans lequel la base théorique de chaque mandrin (4) contacte les bases théoriques des mandrins (4) qui lui sont adjacents.

5. Dispositif selon l'une quelconque des revendications précédentes dans lequel la base de chaque mandrin (4) a une section inférieure à la section du mandrin (4) qui se trouve vers son extrémité libre.

6. Dispositif selon la revendication 5 dans lequel la section de la base est de forme ovale.

7. Dispositif selon la revendication 5 dans lequel la section de la base est de forme rectangulaire.

8. Dispositif selon l'une quelconque des revendications précédentes dans lequel la section du mandrin (4) qui se trouve vers son extrémité libre est un disque.

9. Dispositif selon l'une quelconque des revendications précédentes dans lequel la section du mandrin (4) varie sur sa longueur.

10. Dispositif selon l'une quelconque des revendications précédentes comprenant de moyens de guidage rotatif (12).
